# EUROPEAN PATENT APPLICATION

(11) **EP 4 707 360 A1**
(43) Date of publication of application: **11.03.2026**
(21) Application number: 24199031.6
(22) Date of filing: 06.09.2024
(51) Int. Cl.: C10G 45/00, C07C 1/20, C10G 50/00, C10G 69/12

(54) **PROCESS AND PLANT FOR PRODUCTION OF SUSTAINABLE AVIATION FUEL FROM METHANOL**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Haag, Stéphane, 60388 Frankfurt am Main (DE); Mittelstaedt, Sabine, 60439 Frankfurt am Main (DE); Palauschek, Norbert, 60439 Frankfurt am Main (DE); Sethi, Riya, 60439 Frankfurt am Main (DE); Koehler, Martin, 60439 Frankfurt am Main (DE)
(74) Representative: Air Liquide

(57) **Abstract**

The invention relates to a process for producing sustainable aviation fuel, comprising a conversion step (i) for a heterogeneously catalyzed conversion of a feed stream containing methanol into a first intermediate process stream con-taining ethylene, propylene, C4+ olefins, and C8+ hydrocarbons, a separation step (ii) for separating different fractions of the first intermedi-ate process stream into at least a C2 fraction, a C3 fraction, a C4+ fraction and a C8+ fraction and an oligomerization step (iii) for oligomerizing at least the C3 fraction and the C4+ fraction to form sustainable aviation fuel, characterized in that step (i) is conducted under isothermal conditions. The invention further relates to a plant for producing sustainable aviation fuel, comprising a fixed bed reactor.

## Description

The invention is directed to a process for producing sustainable aviation fuel, comprising a conversion step (i) for a heterogeneously catalyzed conversion of a feed stream containing methanol into a first intermediate process stream containing ethylene, propylene, C4+ olefins and C8+hydrocarbons, a separation step (ii) for separating different fractions of the first intermediate process stream into at least a C2 fraction, a C3 fraction, a C4+ fraction and a C8+ fraction and an oligomerization step (iii) for oligomerizing at least the C3 fraction and the C4+ fraction to form sustainable aviation fuel, whereby it is essential that step (i) is conducted under isothermal conditions. Moreover, the invention also covers a relating plant.

Sustainable aviation fuel (SAF) seems to be the only near-term solution to reducing emissions associated with commercial air travel since SAF represents a subset of alternative jet fuel that, in addition to being from a non-petroleum source, produces fewer CO₂ and particulate matter (PM) emissions compared to conventional jet fuel.

SAF can be derived from various renewable sources, such as biomass, waste oils, and other sustainable feedstocks, making it a versatile and adaptable option for the aviation industry. The production pathways for SAF include technologies like Fischer-Tropsch synthesis, hydroprocessed esters and fatty acids (HEFA), and alcohol-to-jet (ATJ) conversion, each offering different advantages in terms of feedstock flexibility and emission reductions.

One of the primary benefits of SAF is its potential to significantly lower the lifecycle greenhouse gas (GHG) emissions compared to traditional jet fuels. Lifecycle analysis (LCA) studies have shown that SAF can reduce GHG emissions by up to 80% depending on the feedstock and production method used. This reduction is crucial for the aviation industry, which is under increasing pressure to mitigate its environmental impact amidst growing global air travel demand.

Furthermore, SAF not only addresses CO₂ emissions but also reduces the emission of other harmful pollutants. For example, SAF has been shown to produce fewer sulfur oxides (SOx) and nitrogen oxides (NOx), which are major contributors to air pollution and have significant health and environmental implications. Additionally, the lower particulate matter emissions associated with SAF can improve air quality around airports and reduce the negative health impacts on nearby communities.

Despite the clear environmental advantages, the widespread adoption of SAF faces several challenges. The high production costs compared to conventional jet fuel, limited availability of sustainable feedstocks, and the need for substantial infrastructure investments are significant barriers to scaling up SAF production. Moreover, regulatory and certification processes must ensure that SAF meets the stringent safety and performance standards required for aviation use.

To overcome these challenges, coordinated efforts from governments, industry stakeholders, and research institutions are essential. Policy support in the form of subsidies, incentives, and mandates can help bridge the cost gap and stimulate investment in SAF production facilities. Additionally, ongoing research and development are crucial to improving the efficiency and scalability of SAF production technologies, ultimately making it a more economically viable option for airlines worldwide.

In conclusion, SAF stands out as a pivotal solution for achieving a more sustainable aviation industry. By significantly reducing GHG and pollutant emissions, SAF contributes to the broader goals of mitigating climate change and improving air quality. However, realizing the full potential of SAF requires overcoming economic and logistical hurdles through concerted efforts and innovative advancements in technology and policy.

SAF production from methanol is an emerging approach that leverages methanol's versatility and potential as an intermediate feedstock in the production of cleaner jet fuel. Methanol, which can be produced from a variety of renewable sources such as biomass, municipal solid waste, and even directly from captured carbon dioxide and green hydrogen, offers a promising pathway for sustainable fuel synthesis.

The process, often also called methanol-to-jet (MTJ) fuel process, involves converting methanol into hydrocarbons suitable for aviation use. This typically involves several key steps:
- Methanol Synthesis: Typically, methanol is first synthesized from syngas, which is a mixture of hydrogen and carbon monoxide. Syngas can be derived from gasification of biomass or through reforming processes using renewable energy sources. Alternatively, H₂ can also be obtained via electrolysis.
- Methanol-to-Olefins (MTO): The methanol is then converted into olefins, such as ethylene and propylene, through a catalytic process. Olefins serve as key building blocks in the production of longer-chain hydrocarbons.
- Oligomerization: The olefins produced are then oligomerized, a process that combines smaller olefin molecules into larger hydrocarbon chains, forming jet-range hydrocarbons.
- Hydrogenation and Fractionation: The hydrocarbon chains are further refined through hydrogenation and fractionation processes to meet the strict specifications required for jet fuel, such as appropriate boiling points and combustion characteristics.

The benefits of producing SAF from methanol are multifaceted. Firstly, methanol production can be highly sustainable if derived from renewable sources or from carbon dioxide captured directly from the atmosphere, aligning with the goal of creating a closed carbon cycle. This significantly reduces the lifecycle greenhouse gas (GHG) emissions associated with the fuel. Additionally, the methanol-to-jet pathway can potentially integrate with existing industrial processes and infrastructure, facilitating its adoption and scaling. Methanol is already widely used in various industries, and leveraging existing supply chains and technologies can help accelerate the deployment of SAF. Moreover, the MTJ process can be adapted to produce a variety of hydrocarbon products, offering flexibility in meeting different fuel demands and market conditions. This versatility enhances the economic viability of SAF production from methanol.

In conclusion, SAF production from methanol represents a promising and flexible approach to creating sustainable aviation fuel. By leveraging renewable methanol as a feedstock, this pathway offers significant potential for reducing the aviation industry's carbon footprint. Continued innovation and supportive policies will be essential to overcoming the technical and economic challenges, enabling methanol-based SAF to contribute effectively to sustainable air travel.

However, challenges remain in optimizing the efficiency and cost-effectiveness of the process. The economics of the Standard Methanol-to-Propylene (MTP) process for producing Sustainable Aviation Fuel (SAF) are highly challenging, with significant room for improvement in yield. Current yields to SAF are about 65-75% when considering both Fischer-Tropsch (FT) and classical Methanol-to-Olefins (MTO) processes, including MTP and oligomerization. The olefin yield is approximately 31.9%, and the SAF yield stands at 29.2%, resulting in an overall carbon yield to SAF of roughly 74%.

The Methanol-to-Olefins (MTO) process achieves an olefin yield of approximately 36.8% and a SAF yield of 34%, with the overall carbon yield to SAF exceeding 80%. However, this process involves a high amount of coke formation (ranging from 5-20%) due to the fluidized bed technology, which presents scaling challenges. The use of FCC-type reactors, which rely on heat from carbon burn-off in the regenerator, leads to higher carbon losses and additional CO2 emissions. The high SAF yield is likely achieved through a combination of MTO and Olefin Cracking Process (OCP), maximizing the production of ethylene (C2=) and propylene (C3=). It appears, though not definitively confirmed, that higher olefins are not utilized for oligomerization in this context.

The Fischer-Tropsch (FT) process for producing SAF from CO2 necessitates the use of a Reverse Water-Gas Shift (RWGS) reaction or a CO2 to CO electrolyzer, both of which are unproven technologies. Even if these technologies were operational, the expected maximum carbon yield to SAF would be close to 75-78%.

In summary, there is no known process that overcomes all the disadvantages of existing processes equally.

Therefore, it is the object underlying the current invention to provide a process which is capable of achieving high yields while simultaneously maintaining low coking rates.

This aim is solved by a process with the features of claim 1.

The process for producing sustainable aviation fuel begins with a conversion step where a heterogeneous catalyst facilitates the conversion of a feed stream containing methanol. This conversion results in a first intermediate process stream that includes ethylene, propylene, C4+ olefins, and C8+hydrocarbons.

The term "C4+" refers to hydrocarbons with four or more carbon atoms in their molecular structure. This designation is commonly used in chemistry and chemical engineering to describe a variety of hydrocarbons, including alkanes, alkenes, and other organic compounds with carbon chains of four or more carbon atoms.

In the context of this chemical process, "C4+" includes several specific categories of hydrocarbons. In detail, C4+ olefins are unsaturated hydrocarbons with four or more carbon atoms that serve as feedstocks in various industrial processes. These olefins are valuable in petrochemical synthesis and can be converted into higher-value products like polymers and specialty chemicals. C4+ paraffins are saturated hydrocarbons with four or more carbon atoms, commonly used as fuels or lubricants due to their stability and low reactivity compared to olefins. C4+ oxygenates are organic compounds that contain oxygen and have four or more carbon atoms. These include alcohols, ethers, and esters, which are often used as additives in fuels or as solvents in various chemical processes.

It is the basic idea underlying the invention that the conversion step is carried out under isothermal conditions. The term "isothermal" refers to the control of a chemical reaction such that it proceeds at a constant temperature throughout the entire reaction process stage. This involves maintaining the reaction environment at a specific, unchanging temperature, which helps to optimize reaction rates, improve yield, and ensure consistent product quality. Conducting the conversion under isothermal conditions ensures a uniform temperature throughout the reaction, thereby improving the overall yield of olefins by approximately 15%. This uniformity also reduces the formation of paraffins and aromatics, which simplifies the downstream oligomerization process and enhances the separation efficiency.

Following the conversion, the process involves a separation step where different fractions of the first intermediate process stream are separated into distinct components. These components include at least a C2 fraction, a C3 fraction, a C4+ fraction (comprising C4, C5, C6 and C6 compounds) and a C8+ fraction. The effective separation of these fractions is crucial for the subsequent steps, as it allows for the precise oligomerization of specific fractions, leading to the production of high-quality sustainable aviation fuel. This separation step not only ensures the purity of the olefins but also optimizes the utilization of each fraction, thereby enhancing the overall efficiency and yield of the process.

The next step in the process is the oligomerization of the separated fractions. At least the C3 and the C4+ fraction (containing compounds with 4 to 7 C-atoms) are oligomerized to form sustainable aviation fuel. An additional oligomerization of the C2 fraction may increase the overall yield. In any case, the oligomerization process of a stream in the composition as it results from the conversion under the given process parameters is highly efficient, converting more than 90% of the olefins into sustainable aviation fuel. This high conversion rate is a significant advantage, as it maximizes the production of SAF while minimizing waste and byproducts.

Oligomerization is a chemical process where small monomer molecules are converted into larger, more complex oligomer molecules. In the context of producing sustainable aviation fuel (SAF), oligomerization specifically refers to the conversion of light olefins, such as ethylene and propylene, into longer-chain hydrocarbons suitable for aviation fuel. This process occurs in an oligomerization reactor designed to facilitate the reaction under controlled conditions of temperature and pressure.

The process typically involves the use of a catalyst, commonly acidic zeolites, which provide active sites for the olefins to react. These catalysts are crucial in promoting the formation of the desired hydrocarbon chains. The reaction conditions in the oligomerization reactor are carefully maintained to optimize the formation of longer-chain hydrocarbons. This includes maintaining a temperature range between 100°C and 300°C and pressures ranging from 1 to 50 atmospheres, which promotes the reaction while minimizing unwanted side reactions.

The primary feed streams for the oligomerization process are light olefins, such as ethylene and propylene, derived from the prior conversion of methanol or methanol/DME mixtures. These olefins are fed into the reactor, where they undergo a series of polymerization reactions on the catalyst surface, forming dimers, trimers, and higher oligomers. The process is controlled to maximize the production of C8-C16 hydrocarbons, ideal components for aviation fuel.

The output from the oligomerization reactor is a mixture of hydrocarbons with varying chain lengths. This product stream is then often subjected to further processing to separate and purify the desired fuel components. Typically, the oligomerized product is passed through a hydrogenation unit to saturate any remaining unsaturated hydrocarbons. It is then fractionated to separate different fuel fractions, such as naphtha, kerosene, and diesel. This ensures the final product meets the stringent quality standards required for aviation fuel.

By carefully controlling the oligomerization process, light olefins can be efficiently converted into high-quality, sustainable aviation fuel components. This process contributes significantly to producing environmentally friendly aviation fuel, aiding in the transition to a more sustainable aviation industry.

In addition to the main steps explained above, the process according to the invention also includes specific temperature conditions for the conversion step. The temperature during this step is maintained between 425°C and 525 °C, with a preferred range of 450 °C to 500°C, and an optimal range of 470°C to 500°C. Maintaining the temperature within these ranges is critical for achieving the desired reaction rates and product distributions. It ensures that the conversion process is both efficient and selective, thereby maximizing the yield of valuable olefins while minimizing the formation of undesired byproducts.

Moreover, the process preferably incorporates a further step for hydrogenation and fractionation of the product stream obtained from the oligomerization step. This additional step enhances the quality of the final sustainable aviation fuel by saturating any remaining unsaturated hydrocarbons and separating the final product into its desired fractions. This step ensures that the SAF produced is of high purity and meets the stringent requirements for aviation fuel, thereby enhancing its marketability and usability.

Hydrogenation in the understanding underlying this invention is a chemical reaction that involves adding hydrogen (H₂) to unsaturated bonds in hydrocarbons, typically in the presence of a catalyst such as palladium, platinum, or nickel. In the context of olefins, hydrogenation saturates the carbon-carbon double bonds, converting them into single bonds and producing alkanes. This process helps stabilize the resulting hydrocarbons, making them more suitable for the high thermal and oxidative stability required in aviation fuels. Hydrogenation also reduces the aromatic content, which is desirable since aromatics can negatively impact fuel performance and emissions. Moreover, hydrogenated products typically have better combustion characteristics and lower emissions, which are crucial for sustainable aviation fuels.

Fractionation is a separation process that divides the hydrocarbon mixture into its individual components or fractions based on their boiling points. This is typically achieved through distillation. The mixture is heated, and the components are separated into different streams based on their volatility. The separated fractions include light gases, naphtha, gasoline, kerosene, and diesel, among others. Each of these fractions can be further processed or blended to meet specific fuel standards. Fractionation also purifies the olefin streams by removing impurities and undesirable components, ensuring that the final products meet the required specifications for SAF.

The combination of hydrogenation and fractionation enhances the overall quality of the fuel. Hydrogenation ensures that the olefins are converted into stable alkanes, while fractionation allows for the precise separation and blending of hydrocarbon streams to achieve the desired fuel properties. This integrated approach results in a high-quality, sustainable aviation fuel that meets stringent performance and environmental standards.

The methanol itself can be produced using different feedstocks but it should be preferably coming from carbon dioxide reacted with hydrogen and/or from biomass.

The process also considers the option of a partial conversion of methanol to dimethyl ether (DME) prior to the main conversion step. By using a feed stream that contains both methanol and dimethyl ether, the efficiency of the conversion step is further enhanced. The presence of dimethyl ether alongside methanol improves the reaction kinetics and increases the overall yield of the desired olefins, thereby optimizing the process.

The conversion of methanol to dimethyl ether (DME) is an important chemical process in industrial chemistry, offering a versatile compound used in various applications, including as a fuel, propellant, and feedstock for chemical synthesis. The process primarily involves catalytic dehydration, where methanol is transformed into DME through a reaction facilitated by solid acid catalysts.

Typically, the process begins with the purification of methanol to remove impurities that might interfere with the catalyst's performance. The purified methanol is then introduced into a reactor where it comes into contact with a solid acid catalyst. Common catalysts used include materials such as alumina (Al₂O₃), silica (SiO₂), or zeolites, which possess the acidic properties necessary for promoting the dehydration reaction.

In the one-step process as one alternative to produce DME, methanol is directly converted into DME in a single reactor. This method employs a dual-function catalyst that simultaneously catalyzes both the dehydration of methanol to DME and the subsequent reactions required to complete the process. The key advantage of the one-step process is its simplicity and cost-effectiveness due to fewer equipment and operational steps. However, the efficiency and yield can be influenced by the catalyst's performance and the ability to maintain optimal reaction conditions throughout the process.

Alternatively, DME is produced in a two-step process, which involves separate stages for the dehydration of methanol and the subsequent purification of DME.

In the first stage, methanol is dehydrated in the presence of a solid acid catalyst such as alumina (Al₂O₃), silica (SiO₂), or zeolites. The dehydration reaction converts methanol into DME and water according to the following reaction:

2 CH₃OH → CH₃OCH₃ + H₂O

The reaction takes place under high temperatures, typically ranging from 200 °C to 300 °C, and moderate to high pressures. The specific conditions depend on the catalyst used and the desired rate of reaction. Since the reaction is endothermic, it requires an input of heat to proceed effectively.

In the second stage, the reaction mixture containing DME, water, and any unreacted methanol is subjected to separation and purification. Distillation is commonly used to separate DME from water and methanol due to their different boiling points. The DME is condensed and collected as a purified product, while unreacted methanol is often recycled back into the dehydration reactor to improve overall yield and efficiency.

The two-step process allows for greater control over each stage of the reaction, potentially leading to higher yields and purer DME. However, it is more complex and requires additional equipment and operational steps compared to the one-step process.

In both processes, DME and water are produced. The reaction mixture is subsequently cooled to facilitate the separation of DME from the water. Since DME has a lower boiling point than water, it can be selectively condensed and separated through distillation processes. Unreacted methanol is often recycled back into the reactor to improve yield efficiency.

Recycling also takes part of the process according to the invention since methanol and/or dimethyl ether can be separated during the separation step and led back into the conversion step. This recycling not only reduces the waste of valuable feedstock but also enhances the overall efficiency and sustainability of the process. By reusing these components, the process minimizes the need for fresh feedstock, thereby reducing operational costs and environmental impact.

It is important to minimize the concentration of oxygenates in the olefin products to as low a level as possible, ideally no more than 1 ppm, to avoid overloading the downstream catalysts that processes these olefins. The unconverted oxygenates (MeOH + DME) primarily end up in a Depropanizer bottom and are recycled back to the MTP reactor. Additionally, the higher olefins in the C4+ olefins stream, side draw stream, and gasoline stream are processed separately to maximize olefin yield.

Water, separated in the separation step, may also be managed efficiently within the process. At least part of the separated water is fed back into the conversion step. Additionally or alternatively a portion of the water is utilized in other process stages such as feeding an electrolyzer or in the gasification section. This integrated approach to water management enhances the sustainability of the process by minimizing water waste and optimizing its use within the plant.

As already mentioned above, an additional oligomerization of the C2 fraction may increase the yield obtained in the oligomerization. Moreover, this naturally affects the composition of the product stream, allowing sustainable aviation fuels with different properties to be produced.

The process further may include the recycling of at least parts of the C2 and/or the C3 fraction from the separation step (ii) back into the conversion step (i). This recycling back into the conversion step allows for further cracking and conversion, leading to an increase in the production of higher-value olefins.

Similarly, a purge stream containing at least 10 wt.-% olefins is recycled from the oligomerization step back into the conversion and/or or the separation step. This recycling increases the recovery rate of olefins and ensures that the maximum possible amount of feedstock is converted into the desired products, thereby enhancing the overall efficiency and yield of the process. In detail, a purge with a high amount of olefins, preferably more than 50 wt.-% olefins, is passed into the separation to recovers valuable olefins, while a purge with a lower olefin content, preferably below 50 wt.-%, is at least partly recycled to the conversion to be reconverted. A recycling back into the conversion and/or or the separation step is the easier option, however, it is also possible to have different recycling streams with different olefin contents or to split one purge and add it into both steps.

Nevertheless, recycling olefins to the reactor might no longer be necessary, allowing for a once-through operation, which can lead to a reduction in equipment size. Therefore, the invention thus also covers the variant in which olefin recycling is explicitly excluded.

In addition or alternatively, the C8+ fraction is admixed to the product stream resulting from the oligomerization. Thereby, properties if the sustainable aviation fuels can be tailored.

The process also preferably features an in-situ regeneration of the heterogeneous catalyst used in the conversion step. This regeneration is carried out by passing a gas mixture of oxygen and nitrogen through the catalyst to convert carbon residues into carbon dioxide. This in-situ regeneration ensures the longevity and effectiveness of the catalyst, thereby maintaining the efficiency of the conversion step and reducing the need for frequent catalyst replacement.

During the in-situ regeneration, the temperature is carefully controlled within the range of 425°C to 500°C, with a preferred temperature range of 460 to 490°C, in an optimized process around 480°C. This temperature control is crucial for effective regeneration, ensuring that carbon residues are fully converted to carbon dioxide without damaging the catalyst. The careful monitoring of oxygen concentration after the conversion step ensures that the in-situ regeneration is only carried out as long as no oxygen can be detected, thereby preventing any adverse effects on the subsequent steps.

Furthermore, the invention is also directed to a plant as described in claim 13, which can be implemented using a process according to any of claims 1 through 12. It goes without saying that all features described for the process are also potential embodiments of the claimed plant and vice versa.

The corresponding plant for producing sustainable aviation fuel comprises a fixed-bed reactor configured for the heterogeneous-catalyzed conversion of a feed stream containing methanol into a first intermediate process stream containing ethylene, propylene, C4+ olefins, and C8+ hydrocarbons. The fixed-bed reactor operates under isothermal conditions, ensuring a uniform temperature distribution that optimizes the conversion efficiency and product yield.

The separation unit within the plant is designed to separate different fractions of the first intermediate process stream into at least a C2 fraction, a C3 fraction, a C4+ fraction, and a C8+ fraction. This precise separation is essential for the subsequent oligomerization step, ensuring that each fraction is optimally utilized to produce high-quality sustainable aviation fuel.

The oligomerization unit in the plant is configured to oligomerize at least the C3 fraction and the C4+ fraction to form sustainable aviation fuel. This unit is designed to achieve a high conversion rate, ensuring that preferably more than 90% of the olefins are converted into the desired aviation fuel.

The plant is further characterized by featuring a system for ensuring isothermal conditions in the fixed-bed reactor. As it is a well-established technique, a molten salt bath is preferred.

Moreover, it turned out to be favorable that the fixed-bed reactor features only one catalyst layer and/or a molten salt bath for temperature control within the reactor. This design enhances the efficiency and effectiveness of the catalytic conversion, ensuring optimal reaction conditions and high product yield.

The reactor within the plant can be designed as a tubular reactor or a plate reactor, both of which offer specific advantages in terms of heat transfer and reaction kinetics. The tubular reactor design is particularly effective for high-temperature processes, while the plate reactor design provides a compact and efficient solution for controlled reactions. To accommodate larger production capacities, the plant can include at least two reactors, preferably even more, operating in parallel. This parallel reactor configuration allows for increased throughput and operational flexibility, ensuring that the plant can meet varying production demands efficiently.

Such a parallel configuration additionally has the advantage that the catalyst can be regenerated in one reactor while the reaction continues in the other reactors. When using at least four reactors, it is possible to always have one reactor in regeneration mode while the other reactors ensure a continuous intermediate product stream. This allows for a steady operation of the downstream stages, starting with separation, thereby significantly improving the overall efficiency of the plant.

Further, in the context of the invention, LPG stands for Liquefied Petroleum Gas, which is a flammable hydrocarbon gas mixture that is used as fuel for heating, cooking, and in some vehicles. It is primarily composed of propane, butane, and a variety of other light hydrocarbons. LPG is typically stored in liquid form under pressure in cylinders or tanks, which makes it portable and easy to transport. When released from its pressurized container, LPG vaporizes and can be used as a gas. Its versatility and high energy content make it a popular choice for many energy applications.

Moreover, in essence, "C4+" encompasses a diverse range of hydrocarbons with four or more carbon atoms, each playing a significant role in industrial applications and chemical synthesis while "C4" stand for hydrocarbons with exact four carbon atoms. Naturally, this explanation holds true for any other number of carbon atoms.

In summary, the described process and plant for producing sustainable aviation fuel leverage isothermal reactor conditions, efficient separation, and advanced recycling and regeneration techniques to optimize the conversion of methanol into high-quality sustainable aviation fuel. The detailed features and benefits of each step and component ensure a high yield, minimal waste, and sustainable operation, making this invention a significant advancement in the field of sustainable fuel production. In particular, it is possible to achieve above 75 % yield - carbon base to SAF by using an isothermal reactor to convert methanol to a mixture of hydrocarbons since it is possible to convert at least 80% on a mole C-basis to olefins.

Further developments, advantages and possible applications of the invention can also be taken from the following description of the drawings as well as the examples. All features described and/or illustrated form the subject-matter of the invention per se or in any combination, independent of their inclusion in the claims or their back-reference.
- Fig. 1: shows schematically a process for producing SAF according to the state of the art,
- Fig. 2: shows schematically a first option process for producing SAF according to the invention,
- Fig. 3: shows schematically a more detailed separation process according to the invention,
- Fig. 4: shows schematically a second option process for producing SAF according to the invention,
- Fig. 5: shows schematically an isothermal operated reactor for the conversion step according to the invention and
- Fig. 6: shows schematically a fixed bed for the conversion step according to the invention.

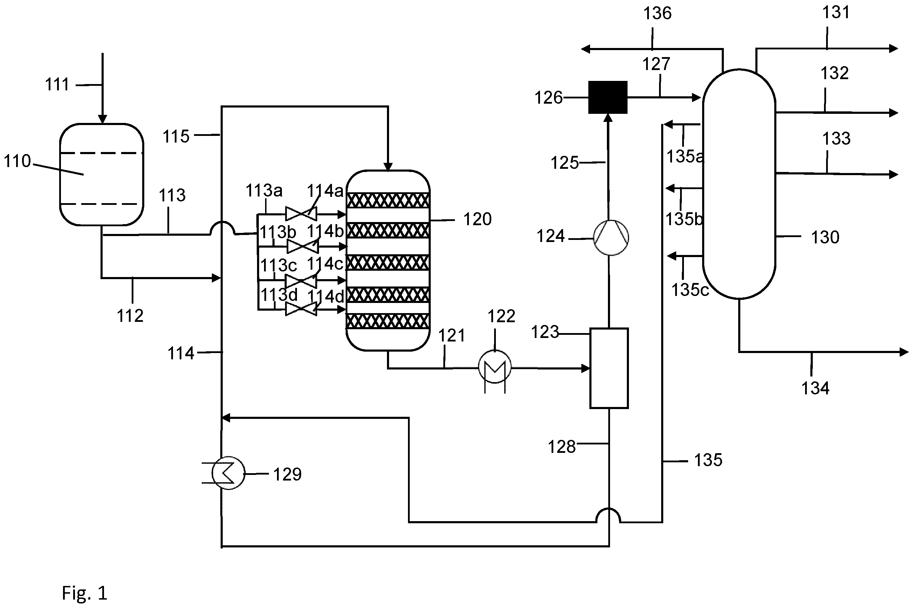

Figure 1 shows a process for producing SAF as known from the state of the art. The source of methanol is not shown. As one option, carbon dioxide can be converted to methanol using hydrogen produced from an electrolyzer. This process involves capturing carbon dioxide and reacting it with hydrogen gas in the presence of a catalyst to form methanol. This method is considered sustainable as it utilizes renewable energy sources to generate hydrogen and helps in reducing carbon dioxide emissions.

Methanol can also be produced from biomass through various feedstocks. One approach involves converting biogas into methanol. Biogas, which is produced from the anaerobic digestion of organic matter, undergoes an upfront reforming process to produce syngas (a mixture of carbon monoxide and hydrogen). The syngas is then catalytically converted to methanol.

Another method involves the gasification of biomass to produce syngas. This process can be carried out with or without the co-feeding of hydrogen. When hydrogen is added, it maximizes the carbon conversion efficiency of the biomass, enhancing the overall yield of methanol. The syngas produced from gasification is subsequently converted to methanol through catalytic reactions.

All these methods to produce methanol can not only be used in state-of-the-art process but also for the feedstock used in the current invention.

The methanol obtained from any of these processes can be further converted to propylene through the Methanol-to-Propylene (MTP) process. In this process, methanol is dehydrated to form dimethyl ether (DME), which is then converted to propylene using a zeolite catalyst under specific reaction conditions. This method is advantageous as it provides an alternative route to produce propylene, a valuable petrochemical, from renewable sources.

Finally, the propylene and other olefins produced can undergo oligomerization. Oligomerization is a process where small olefin molecules (like ethylene and propylene) are chemically combined to form larger olefin molecules. This process is crucial in the production of sustainable aviation fuel (SAF) as it helps in creating the necessary hydrocarbons with properties suitable for use as aviation fuel. The oligomerization of different olefins thus plays a vital role in transforming renewable feedstocks into high-value fuels and chemicals.

The depropanizer bottom is rich in oxygenates, primarily methanol (MeOH) and dimethyl ether (DME). It constitutes a C3/C4 cut. Recycling the oxygenate-rich depropanizer bottom stream not only eliminates a byproduct stream but also increases the yield of C2 and C3 olefinic products by approximately 1-3%

A once-through process is a chemical or industrial process in which the feedstock passes through the system only once without any recycling of unreacted materials or intermediates back into the system. In this approach, all inputs are processed in a single pass through the reactor or processing unit, and the products are collected at the output stage. This method simplifies the process design and can reduce equipment size and complexity, but it may be less efficient in terms of resource utilization compared to processes that recycle unreacted materials.

Regardless of the method of production, methanol is introduced into reactor 110 via line 111, where it is partially converted to DME. A portion of the methanol/DME stream is directed into reactor 120 through lines 112 and 115. This reactor is equipped with multiple fixed beds, with any number of beds being possible. The remaining methanol and DME stream is distributed through line 113 to lines 113a to 113d. Using valves 114a to 114d, methanol and DME are introduced into subsequent fixed beds following the first fixed bed. This shifts the chemical equilibrium and maximizes yield.

An olefin-rich intermediate product stream is then withdrawn from reactor 120 via line 121 and cooled using heat exchanger 122. The methanol and DME still present in the product stream are removed in the separation device 123, which is designed, for example, as a quench, and are then returned to reactor 120 via lines 128, 114, and 155, preferably passing through heat exchanger 129.

The olefin-rich stream is directed through line 125, preferably through a compressor 124, into the preparation stage 126 and from there through line 127 into a separation device 130. This separation device 130 is typically designed as a large column with multiple draw-off points for the individual fractions or as several interconnected columns. Long-chain carbon compounds, particularly carbon compounds with five or more carbon atoms, preferably at least eight carbon atoms, are returned to reactor 120 via lines 135a to 135c from various positions in one or more rectification columns through lines 135, 114, and 115.

Fuel gases are withdrawn through line 136. An ethylene fraction can be separated and withdrawn through line 131, while a propylene fraction can be separated and withdrawn through line 132. LPG is withdrawn through line 133, and gasoline is withdrawn through line 134.

An oligomerization as well as hydrogenation and fractioning are not shown in detail.

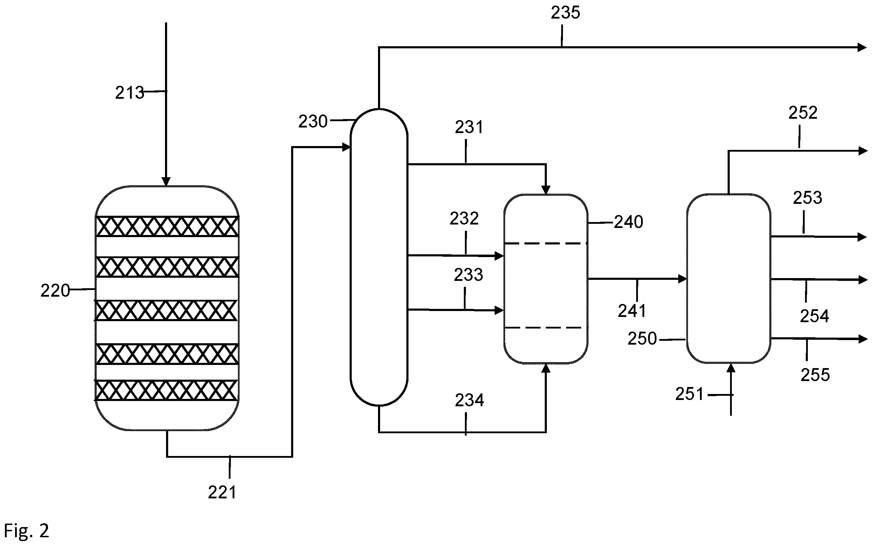

Figure 2 depicts a first option for a process according to the invention. Methanol and/or a mixture of methanol and dimethyl ether (DME) from any source are fed through line 213 into reactor 220, where they are converted into olefins. This conversion takes place in several fixed beds, though preferably in a single fixed bed.

The resulting intermediate process stream is directed via line 221 into at least one separation device 230, which preferably consists of multiple interconnected columns. From this separation unit 230, olefin-containing streams are withdrawn, including ethylene via line 231, propylene via line 232, LPG or a C4+ fraction via line 233, and gasoline or a C8+ fraction via line 234, and are fed at least partly into the oligomerization reactor.

The product stream generated in the oligomerization reactor is then sent through line 241 to a hydrogenation and fractioning unit 250, into which hydrogen is introduced via line 251. From the hydrogenation and fractioning unit 250, off-gas is withdrawn through line 252, naphtha through line 253, kerosene through line 254, and diesel through line 255.

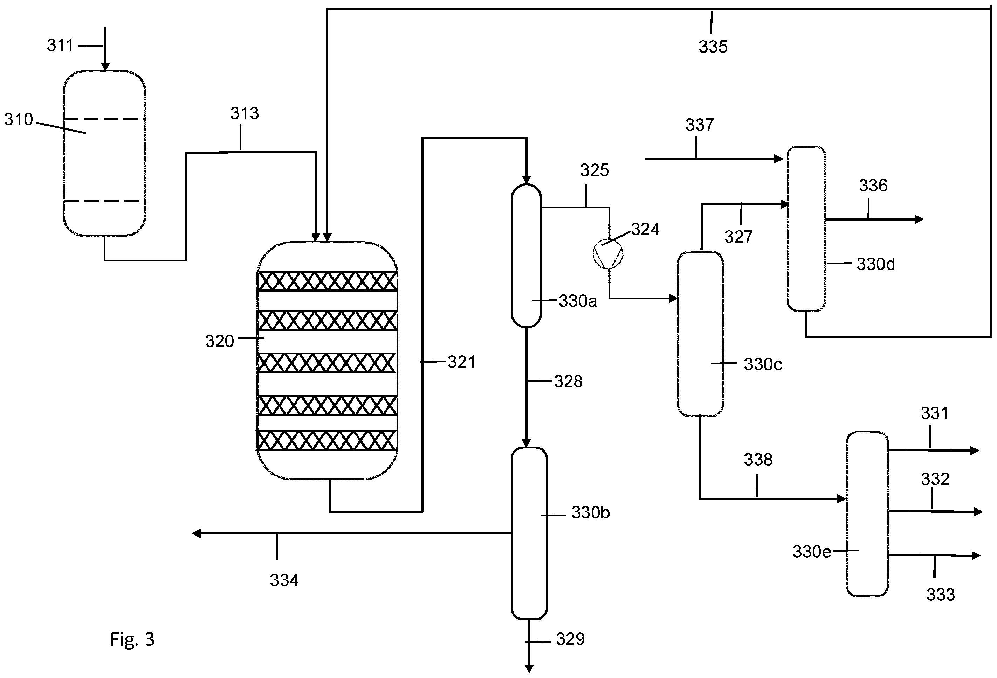

Figure 3 illustrates an option for the separation unit shown in Figure 2 in greater detail. Firstly, a reactor 310 is provided upstream reactor 320 for the production of DME from the methanol introduced via line 311. This methanol/DME mixture is then fed into the conversion reactor through line 313.

The intermediate stream produced in the conversion reactor is transported via line 321 to the quench 330a. Therein, water is used to quench the intermediate stream from the conversion stage. In quench 330a oxygenates, particularly methanol and DME, as well as water, are removed via line 328.

The removed oxygenate mixture is further separated in a rectification column 330b, allowing water to be extracted via line 339, and DME and methanol to be returned via line 334. Both water and the methanol/DME mixture can be partially recycled in other parts of the process not shown.

The olefin-containing stream is removed from quench 330a via line 325 and through compressor 324, then directed to column 330c, also known as the debutanizer. From the top of this column, a C4- fraction, comprising hydrocarbons with 4 or fewer carbon atoms, is extracted and directed via line 327 to column 330d, also known as the depropanizer. A fraction containing C2 and C3 hydrocarbons can be removed from this column via line 336.

Preferably, column 330d is designed as an extractive rectification column, using methanol as the extraction agent. This extraction agent, together with the C4 fraction from the bottom of column 330d, can be returned to reactor 320 via line 335.

The bottom product of column 330c, often named as debutanizer, is fed into column 330e via line 338. This column is often referred to as the dehexanizer. From here, a C4+ fraction is extracted via line 331, a side stream via line 332, and a gasoline fraction via line 333.

All streams separated in this process can be wholly or partially subjected to further processing, particularly oligomerization.

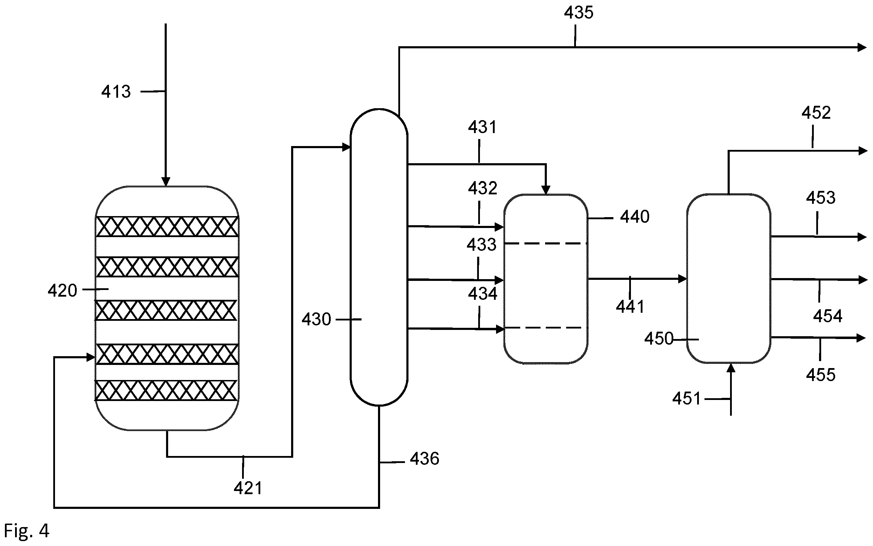

Figure 4 shows an alternative to the process described in Figure 2, which is also according to the invention. Methanol and/or a mixture of methanol and dimethyl ether (DME) from any source are introduced through line 413 into reactor 420, where they undergo conversion into olefins. This conversion process occurs within multiple fixed beds, with a preference for a single fixed bed.

The resulting intermediate process stream is then routed via line 421 to at least one separation unit 430, which ideally comprises multiple interconnected columns. Within this separation unit, olefin-rich streams are extracted, including ethylene via line 431, propylene via line 432, LPG or a C4+ fraction via line 433, and gasoline or a C8+ fraction via line 434, and directed to the oligomerization reactor 440.

In contrast to the variant shown in Figure 2, here a fraction of heavy hydrocarbons, preferably with a chain length of at least 8 carbon atoms, is recycled into reactor 420 via line 436.

The product stream produced in the oligomerization reactor 440 is subsequently transferred through line 441 to a hydrogenation and fractionation unit 450, where hydrogen is added via line 451. In the hydrogenation and fractionation unit, off-gas is removed through line 452, naphtha through line 453, kerosene through line 454, and diesel through line 455.

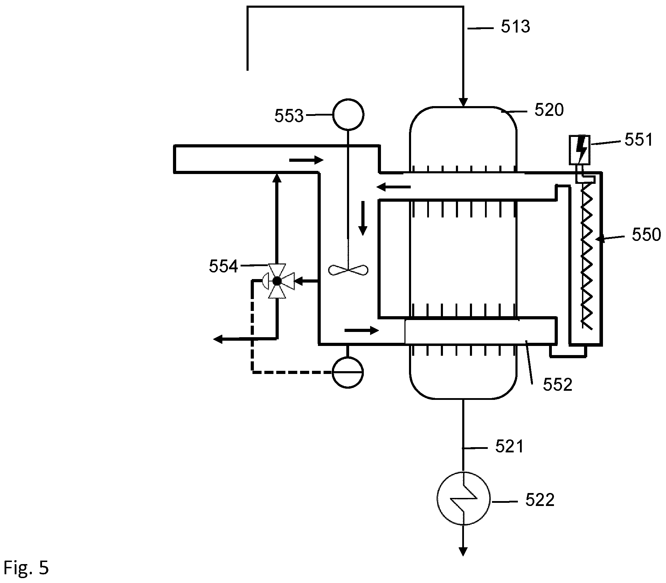

Figure 5 illustrates the design of reactor 520, where the conversion step takes place. As in all variants, the feed stream is introduced through line 513, and the product stream is discharged through line 521 after passing through a heat exchanger 522.

In reactor 510, an isothermal operation is ensured by a molten salt bath. The salt bath is circulated through a piping system 552, passing through reactor 520 at least twice. To prevent clumping, the salt bath is stirred using a stirring device 553. The temperature of the salt bath is raised by an electric heater 551 with corresponding heating coils. Temperature control is managed by device 554.

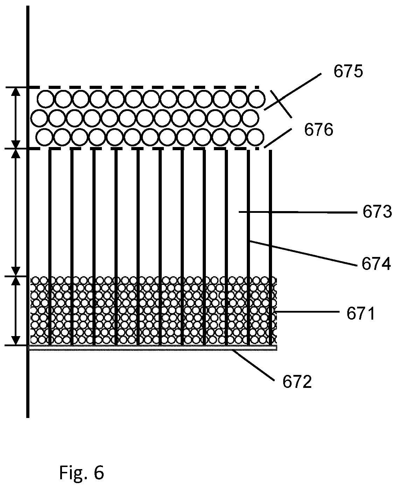

Figure 6 shows the setup of the preferably single fixed-bed layer in the conversion reactor.

A layer 671, which extends over a height of 400 units, is composed of inert, preferably spherical elements 675 with a diameter of, for example, 1/4". This layer is supported by a support grid 672.

Above this layer, over a height of 1200 units, is the actual catalyst bed 673, through which thermos-plates 674 are guided. These thermos-plates 674 also extend into the first layer 671. Above the catalyst bed, there is another layer of inert elements, preferably spherical, supported by a mesh 672. This layer has a height of 300 units, with spherical elements having a diameter of 1/2". The mesh has a size of 3.15 units with a wire diameter of 1.12 mm.

### Examples

The following examples should further demonstrate the effect of a process according to the invention.

Table 1 presents the pressure and temperature dependence of olefin yield under once-through conditions with a H₂O/MeOH ratio of 2/1 kg/kg in a process according to the invention. Depending on pressure and temperature, the olefin yield varies, with the lowest observed yield being 56%, the highest yield reaching 90%, and the average yield calculated at 76%.

**Table 1: Pressure and temperature dependence of olefin yield at once-through conditions.**

| | 1 atm | 1,3 atm | 1,6 atm | 2 atm | 2,5 atm | 3 atm | 3,5 atm | 4 atm | 5 atm |
|---|---|---|---|---|---|---|---|---|---|
| 400 °C | 70% | 69% | 68% | 66% | 65% | 63% | 61% | 60% | 56% |
| 410 °C | 73% | 72% | 71% | 70% | 68% | 66% | 65% | 63% | 59% |
| 420 °C | 77% | 76% | 74% | 73% | 71% | 69% | 68% | 66% | 62% |
| 430 °C | 80% | 78% | 77% | 76% | 74% | 72% | 70% | 68% | 64% |
| 440 °C | 82% | 81% | 80% | 78% | 76% | 74% | 72% | 70% | 66% |
| 450 °C | 84% | 83% | 82% | 80% | 78% | 76% | 74% | 72% | 68% |
| 460 °C | 86% | 85% | 84% | 82% | 80% | 78% | 76% | 74% | 70% |
| 470 °C | 88% | 86% | 85% | 84% | 81% | 79% | 77% | 75% | 71% |
| 480 °C | 89% | 88% | 86% | 85% | 82% | 80% | 78% | 76% | 72% |
| 490 °C | 90% | 88% | 87% | 85% | 83% | 81% | 79% | 77% | 72% |
| 500 °C | 90% | 89% | 87% | 86% | 84% | 81% | 79% | 77% | 73% |

At higher temperatures, olefin yields increase, reaching a maximum of 90% at 490°C and 1 atm. As pressure increases, yields generally decrease. For instance, at 400°C, yields range from 70% at 1 atm to 56% at 5 atm. At 500°C, yields are slightly more stable, ranging from 90% at 1 atm to 73% at 5 atm. The average yield across all temperatures and pressures is approximately 76%.

Table 2 presents the relative yields of various hydrocarbons, including Olefins, Paraffins, Naphthenes, and Aromatics (Aro), for different processes.

**Table 2: Relative yields of Olefins, Paraffins, Naphthenes, and Aromatics (Aro) for different processes.**

| | | **Case 1 (Standard MTP -adiabatic)** | **Case 2 (once-through - adiabatic)** | **Case 3 (once-through isothermal - 470 °C)** |
|---|---|---|---|---|
| Total | Olefins | 75,14 % | 79,3 % | 88,58 |
| | Paraffins | 12,90 % | 12,71 % | 7,87 |
| | Naphthenes | 4,12 % | 3,37 % | 0,75 |
| | Aromatics | 7,21 % | 4,56 % | 2,82 |

Case 1, which uses the standard MTP (Methanol to Propylene) process with adiabatic conditions, the yields are 75.14% Olefins, 12.90% Paraffins, 4.12% Naphthenes, and 7.21% Aromatics. Case 2, employing a once-through process under adiabatic conditions, results in 79.3% Olefins, 12.71% Paraffins, 3.37% Naphthenes, and 4.56% Aromatics. Case 3, utilizing a once-through isothermal process at 470 °C, produces 88.58% Olefins, 7.87% Paraffins, 0.75% Naphthenes, and 2.82% Aromatics. This comparison highlights the increased olefin yield and decreased aromatic and naphthene content in the isothermal process at 470 °C and, therefore, the technical effect of the idea underlying the invention.

Table 3 provides a comparison of coking tendency, feed converted to coke, MeOH losses, and CO2 emissions among three different processes: Methanol-to-Olefins (MTO), standard Methanol-to-Propylene (MTP), and isothermal Methanol-to-X (MTX).

**Table 3: Comparison of coking tendency, feed converted to coke,**

| | **MTO fluidized bed SAPO** | **MTP standard (HC recycling) Zeolite H-ZSM5** | **MTX isothermal once through Zeolite H-ZSM5** |
|---|---|---|---|
| Catalyst coking tendency | Extremely high | Extremely low | Extremely low |
| Feed to coke conversion | > 5% | ∼ 0.1% | ∼ 0.06% |
| MeOH losses | high | low | low |
| CO₂ emissions | higher | low | low |

The Methanol-to-Olefins (MTO) fluidized bed process using SAPO catalyst exhibits an extremely high coking tendency, with more than 5% of the feed converting to coke, resulting in high methanol losses and higher CO2 emissions. In contrast, the standard Methanol-to-Propylene (MTP) process with Zeolite H ZSM-5 catalyst shows an extremely low coking tendency, with only about 0.1% of the feed converting to coke, leading to low methanol losses and low CO2 emissions. The isothermal Methanol-to-X (MTX) process, also using Zeolite H ZSM-5 catalyst, maintains an extremely low coking tendency, with approximately 0.06% of the feed converting to coke, and similarly exhibits low methanol losses and low CO2 emissions. The reduced coking resulting from the isothermal temperature control is therefore another significant advantage of the invention.

Table 4 shows the impact of a recycling of compounds with a relatively high number of carbon atoms, particularly eight or more (HC) as depicted in figure 4.

**Table 4: Typical figures highlighting the impact of HC recycling from depropanizer.**

| | **C2 + C3 olefinic product stream** | | **Depropanizer bottom stream** | |
|---|---|---|---|---|
| | Without HC recycling | With HC recycling | Without HC recycling | With HC recycling |
| Flow | 2746 kg/h | 2797 kg/h | 300 kg/h | 293 kg/h |
| Olefins | 97.33 wt% | 97.27 wt% | 34.37 wt% | 14.61 wt% |
| Paraffins | 2.61 wt% | 2.67 wt% | 24.26 wt% | 42.29 wt% |
| Naphthenes + aromatics + oxygenates + dissolved gasses | Balance (0.06 wt%) | Balance (0.06 wt%) | Balance (41.37 wt%) | Balance (43.10 wt%) |

For the C2 + C3 olefinic product stream, the flow rate is slightly higher with hydrocarbon (HC) recycling at 2797 kg/h compared to 2746 kg/h without recycling. The olefin content remains nearly the same, with 97.33 wt% without HC recycling and 97.27 wt% with HC recycling. The paraffin content is marginally higher with HC recycling (2.67 wt% compared to 2.61 wt% without recycling), while the amount of other components remains constant at 0.06 wt% in both cases.

The amount of diene fed into the oligomerization unit should be restricted because the hydrogenation reaction is exothermic. Experimental results (from Catalyst Test unit 801@ICF) have shown that at isothermal conditions, reducing the diene content can be achieved. Interestingly, there is an optimal temperature for the isothermal reaction that maximizes the production of a high olefin mixture while minimizing diene production. Table 5 shows the effect of temperature on the formation of butadiene and pentadiene under isothermal conditions.

**Table 5: Temperature dependence of butadiene and pentadiene formation at isothermal conditions.**

| **Temperature of the reaction** | **Butadiene in cm³/h** | **Total pentadiene in cm³/h** | **Total butadiene + pentadiene** | **Ratio butadiene /pentadiene** |
|---|---|---|---|---|
| 490 °C | 10.27 cm³/h | 9.43 cm³/h | 19.7 cm³/h | 1.09 |
| 470 °C | 8.07 cm³/h | 6.63 cm³/h | 14.7 cm³/h | 1.22 |
| 450 °C | 8.73 cm³/h | 7.41 cm³/h | 16.14 cm³/h | 1.18 |

| | | | | |
|---|---|---|---|---|
| Feedstock: 50 g/h MeOH + 100 g/h Water; 50 g of MTP catalyst | | | | |

At 490 °C, butadiene is produced at a rate of 10.27 cm³/h and pentadiene at 9.43 cm³/h, with a total combined output of 19.7 cm³/h and a butadiene-to-pentadiene ratio of 1.09. At 470 °C, butadiene production decreases to 8.07 cm³/h and pentadiene to 6.63 cm³/h, resulting in a total of 14.7 cm³/h and a higher butadiene-to-pentadiene ratio of 1.22. At 450 °C, butadiene production is 8.73 cm³/h and pentadiene is 7.41 cm³/h, leading to a total of 16.14 cm³/h and a ratio of 1.18.

The catalyst is regenerated in-situ using a nitrogen/oxygen mixture to convert carbon into CO2, followed by several operational steps to ensure effective regeneration without harming the catalyst. According to this invention, the regeneration process must include at least four distinct steps, each defined by specific temperatures of the salt bath and concentrations of oxygen. Based on these results, the temperature of the reaction should be between 450°C and 500°C, but more preferably between 465°C and 475°C to minimize diene formation hich might be a problem for the oligomerization step.

Table 6 details the steps for in situ regeneration of a catalyst, including varying salt bath temperatures and oxygen concentrations in the N₂/O₂ feed.

**Table 6: Example of salt bath temperature and O₂ concentration steps for in-situ regeneration of catalyst.**

| **Temperature** | **O₂ conc. in the N₂/O₂ feed** |
|---|---|
| 460 °C | 1% |
| 470 °C | 1% |
| 480 °C | 1% |
| 480 °C | 2% |
| 480 °C | 5% |
| 480 °C | 10% |

The process involves increasing the temperature from 460 °C to 480 °C, with the oxygen concentration in the feed increasing from 1% to 10% as the temperature rises. During catalyst regeneration, the salt bath temperature should not exceed 500°C, with an optimal maximum of 480°C. Additionally, the duration of each step depends on the oxygen concentration at the reactor outlet.

### List of references

- 110: DME reactor
- 111 - 115: line
- 120: fixed bed reactor
- 121: line
- 122: heat exchanger
- 123: separation device
- 124: compressor
- 125: line
- 126: preparation stage
- 127 - 128: line
- 130: separation device
- 131 - 134: line
- 213: line
- 220: fixed bed reactor
- 221: line
- 230: separation unit
- 231 -235: line
- 240: oligomerization unit
- 241: line
- 250: hydrogenation and fractioning unit
- 251 - 255: line
- 310: DME reactor
- 311, 315: line
- 320: fixed bed reactor
- 321: line
- 324: compressor
- 325: line
- 327, 328: line
- 330a: quench
- 330b: column
- 330c: column
- 330d: column
- 330e: column
- 331 - 339: line
- 413: line
- 420: fixed bed reactor
- 421: line
- 430: separation unit
- 431 -436: line
- 440: oligomerization unit
- 441: line
- 450: hydrogenation and fractioning unit
- 451 - 455: line
- 513: line
- 520: fixed bed reactor
- 521: line
- 522: heat exchanger
- 550: molten salt bath
- 551: electric heater
- 552: piping system
- 553: stirring device
- 554: temperature control
- 670: catalyst layer
- 671: inert elements
- 672: support grid
- 673: catalyst bed
- 674: thermo-plates
- 675: inert elements
- 676: mesh

## Claims

1. A process for producing sustainable aviation fuel, comprising
a conversion step (i) for a heterogeneously catalyzed conversion of a feed stream containing methanol into a first intermediate process stream containing ethylene, propylene, C4+ olefins, and C8+ hydrocarbons,
a separation step (ii) for separating different fractions of the first intermediate process stream into at least a C2 fraction, a C3 fraction, a C4+ fraction and a C8+ fraction and
an oligomerization step (iii) for oligomerizing at least the C3 fraction and the C4+ fraction to form sustainable aviation fuel,
**characterized in that** step (i) is conducted under isothermal conditions.

2. A process according to claim 1, **characterized in that** the temperature in step (i) is between a lower value of 425, preferably 450, most preferably 470 °C and an upper value of 525 °C.

3. A process according to claim 1 or 2, **characterized in that** a product stream obtained in oligomerization step (iii) is passed into a further step (iv) for hydrogenation and fractionation and/or that prior to conversion step (i), methanol is partly converted to dimethyl ether, and the dimethyl ether is used together with methanol as the feed stream for conversion step (i).

4. A process according to any of the preceding claims, **characterized in that** methanol and/or dimethyl ether are separated in separation step (ii) and fed back into conversion step (i).

5. A process according to any of the preceding claims, **characterized in that** water is separated in step (ii) and is at least partly fed back into step (i) and/or is at least partly used in another process stage, preferably in an electrolyzer and/or in the gasification section.

6. A process according to any of the preceding claims, **characterized in that** the C2 fraction is passed into the oligomerization step (iii) for oligomerizing to form sustainable aviation fuel.

7. A process according to any of the preceding claims, **characterized in that** a hydrocarbon (HC) stream containing at least parts of the C2 and/or the C3 fraction is recycled from separation step (ii) back into the conversion step (i).

8. A process according to any of the preceding claims, **characterized in that** the C8+ fraction is admixed to the product stream resulting from the oligomerization step (iii).

9. A process according to any of the preceding claims, **characterized in that** a purge stream containing at least 10 wt.-% olefins is recycled from oligomerization step (iii) back into conversion step (i) and/or separation step (ii).

10. A process according to any of the preceding claims, **characterized in that** the process further comprises an in-situ regeneration of the heterogeneous catalyst used in conversion step (i) by passing a gas mixture of oxygen and nitrogen through it to convert carbon residues into carbon dioxide.

11. A process according to claim 9, **characterized in that** the temperature in the in-situ regeneration is adjusted within the range of 425 and 500 °C.

12. A process according to claim 9 or 10, **characterized in that** oxygen concentration is measured after conversion step (i) and the in-situ regeneration is only carried out as long as no oxygen can be detected.

13. A plant for producing sustainable aviation fuel, comprising
a fixed-bed reactor (120, 220, 320, 420, 520) configured for the heterogeneous-catalyzed conversion of a feed stream containing methanol into a first intermediate process stream containing ethylene, propylene, C4+ olefins and C8+ hydrocarbons,
a separation unit (130, 230, 330a-e, 430) configured for separating different fractions of the first intermediate process stream into at least a C2 fraction, a C3 fraction, a C4+ fraction, and a C8+ fraction, and
an oligomerization unit (240, 220) configured for oligomerizing at least the C3 fraction and the C4+ fraction to form sustainable aviation fuel,
**characterized in that** the fixed-bed reactor (120, 220, 320, 420, 520) features a heat transfer system (550) for temperature control to ensure an isothermal operation mode.

14. A plant according to claim 13, **characterized in that** the heat transfer system is a molten salt bath (550).

15. A plant according to claims 13 or 14, **characterized in that** the fixed-bed reactor (120, 220, 320, 420, 520) is designed as a tubular reactor or a plate reactor and/or features only one catalyst layer (70).

16. A plant according to claims 13 to 15, **characterized in that** at least two fixed-bed reactors (120, 220, 320, 420, 520) are foreseen in parallel.
